# FASCICULE DE BREVET EUROPEEN

(11) **EP 4 554 883 B1**
(45) Date de publication et mention de la délivrance du brevet: **11.02.2026**
(21) Numéro de dépôt: 23740988.3
(22) Date de dépôt: 06.07.2023
(51) Int. Cl.: B65G 47/38, B65G 47/96

(54) **TRIEUR COMPACT À CHARIOTS PORTEURS GUIDÉS PAR RAILS TUBULAIRES**
KOMPAKTE SORTIERVORRICHTUNG MIT VON ROHRFÖRMIGEN SCHIENEN GEFÜHRTEN TRAGWAGEN
COMPACT SORTER WITH CARRIER CARRIAGES GUIDED BY TUBULAR RAILS

(30) Priorité: 12.07.2022 FR 2207161
(43) Date de publication de la demande: 21.05.2025
(73) Titulaire: Solystic, 92220 Bagneux (FR)
(72) Inventeur: BEAUGRAND, Wilfrid, 26000 VALENCE (FR); HOURS, Patrick, 07130 SAINT-PERAY (FR)
(74) Mandataire: IP Trust
(86) Numéro de dépôt international: PCT/EP2023/068734
(87) Numéro de publication internationale: WO 2024/012985

(56) Documents cités:
- EP-A1- 1 659 079
- EP-A1- 3 383 769
- EP-A1- 3 797 881
- JP-A- S61 145 021
- US-A1- 2013 248 323
- US-A1- 2021 016 323

## Description

### Domaine technique

L'invention se place dans le domaine de la logistique et plus particulièrement dans le domaine du tri de colis automatisé à débit élevé.

### Technique antérieure

La plupart des installations de tri de colis utilisent aujourd'hui des convoyeurs de tri en boucle équipés de sorties de tri pour trier les colis.

Ce type de convoyeur comprend généralement des réceptacles pour colis aptes non seulement à réceptionner et convoyer les colis selon une certaine direction de convoyage mais également à les trier dans les sorties de tri selon un certain plan de tri prédéterminé.

Certaines installations de tri, telles que celle décrite dans les documents US2013/248323, le document US2013/248323 divulgue toutes les caractéristiques du préambule de la revendication 1, et EP2921431, utilisent un convoyeur de tri avec des rails tubulaires qui s'étendent dans la direction de convoyage et sur lesquels se déplacent des chariots aptes à déplacer les réceptacles pour colis.

Les chariots du document EP2921431 sont ici couplés les uns à la suite des autres pour former un train de chariots sur lesquels sont disposés les plateaux formant une surface continue de réception pour colis dans la direction de convoyage, de la même manière que les convoyeurs de tri à rails plats forment une surface continue de réception pour colis.

Dans le document EP2921431, chaque plateau est conçu pour réceptionner, transporter et évacuer un colis dans la sortie de tri appropriée par simple basculement ou à l'aide de bandes transporteuses.

L'utilisation d'un convoyeur à rails tubulaires par rapport à un convoyeur à rails plats permet de réduire le rayon de courbure des virages et donc de réduire avantageusement l'emprise au sol.

Toutefois, les contraintes actuelles exigent de réduire davantage l'emprise au sol tout en réduisant également la hauteur de l'installation de tri.

De plus, si les plateaux sont particulièrement bien adaptés pour trier les colis homogènes et denses à fond plat, les plateaux ne sont pas adaptés pour trier convenablement des colis du type Petit Paquet Import International (PPI) de formes et de poids très disparates, avec une répartition non homogène de la masse du colis.

On comprend ainsi que plus les virages du convoyeur seront serrés et plus la vitesse devra être réduite pour éviter l'éjection des colis.

### Exposé de l'invention

L'objectif de l'invention est donc de résoudre les problèmes précités en proposant une installation de tri plus compacte dont la topologie soit facilement configurable et permettant le tri de colis hétérogènes à vitesse élevée.

A cet effet, l'invention porte sur une installation de tri de colis , selon la revendication 1, comprenant un convoyeur de tri en boucle et des sorties de tri réparties le long du convoyeur de tri, ledit convoyeur de tri comprenant des réceptacles pour colis conçus pour convoyer des colis selon une certaine direction de convoyage et les trier dans les sorties de tri selon un plan de tri prédéterminé, le convoyeur de tri comprenant deux rails tubulaires parallèles qui s'étendent dans la direction de convoyage et des chariots emmanchés sur les rails tubulaires conçus pour déplacer les réceptacles pour colis selon ladite certaine direction de convoyage, caractérisée en ce que chaque réceptacle est intercalé entre deux chariots et est relié auxdits deux chariots par des liaisons pivot pour former un module de réceptacle, et en ce que plusieurs modules de réceptacles sont reliés ensemble pour former un train de réceptacles pour colis dans lequel les réceptacles et les chariots sont répartis en alternance dans la direction de convoyage et dans lequel les réceptacles sont aptes à pivoter par rapport aux chariots lorsque les chariots se déplacent dans la direction de convoyage.

L'idée à la base de l'invention est d'agencer les réceptacles pour colis entre les chariots mutualisés de sorte à former un train de réceptacle pour colis qui limite l'espace occupé par le convoyeur de tri au dessus des rails tubulaires et des chariots.

L'espace récupéré en hauteur permet ainsi de diminuer la hauteur de l'installation de tri.

L'invention consiste également à utiliser un train de réceptacles avec des réceptacles pivotables par rapport aux chariots de sorte à réduire le rayon de courbure du convoyeur de tri dans les virages, les montées et les descentes.

La longueur des chariots dans la direction de convoyage pourra avantageusement être réduite à son strict minimum pour privilégier une augmentation de la longueur des réceptacles et/ou de l'espace entre les chariots et les réceptacles.

Ainsi, plus l'espace entre les chariots et les réceptacles sera important et plus l'amplitude de pivotement des réceptacles vis-à-vis des chariots sera importante.

Le pivotement des réceptacles permet ainsi au train de réceptacles de prendre des virages plus serrés et d'effectuer des changements de dénivelé plus importants.

En diminuant la longueur des chariots dans la direction de convoyage il est également possible de diminuer les forces de contraintes des chariots sur les rails.

L'installation de tri selon l'invention pourra également présenter les caractéristiques suivantes :
- les liaisons pivot sont conçues de manière à ce que chaque réceptacle est apte à pivoter latéralement et verticalement par rapport aux chariots auxquels il est relié ;
- chaque liaison pivot comprend un axe de pivotement sur le chariot partagé avec une autre liaison pivot qui relie le réceptacle qui le précède ou qui le succède dans la direction de convoyage ;
- les rails tubulaires du convoyeur de tri comprennent des sections de rails courbes en forme de clothoïdes ;
- les réceptacles pour colis comprennent une surface de réception pour colis inclinable, entre une position horizontale dans laquelle la surface de réception vient à fleur des rails de sorte que les colis peuvent être insérés sur le réceptacle par glissement et une position inclinée dans laquelle la surface de réception est inclinée dans la direction de convoyage de sorte que les colis peuvent être évacués dans les sorties de tri par gravité ;
- le convoyeur de tri comprend un chemin de came et en ce que chaque réceptacle de tri comprend une came conçue pour coopérer avec ledit chemin de came pendant le déplacement du chariot dans la direction de convoyage de sorte à positionner la surface de réception pour colis en position horizontale ou en position inclinée ;
- au moins un réceptacle pour colis se présente sous la forme d'un godet comportant des flancs latéraux fixes et une paroi de fond faisant office de surface de réception pour colis, ladite paroi de fond étant terminée par une trappe d'évacuation apte à retenir ou libérer un colis lorsque la surface de réception pour colis est en position inclinée ;
- le convoyeur de tri comprend au moins une suspente inférieure montée sur un châssis conçue pour supporter les rails tubulaires, ladite au moins une suspente inférieure s'étendant sous les chariots et les réceptacles de sorte à autoriser le chargement de colis par dessus les rails tubulaires du convoyeur de tri ;
- le convoyeur de tri comprend au moins une suspente supérieure montée sur un châssis conçue pour supporter les rails tubulaires, ladite au moins une suspente supérieure s'étendant au-dessus des chariots et des réceptacles de sorte à autoriser le déchargement des colis sous le convoyeur de tri ;
- le convoyeur de tri comprend des dispositifs d'insertion de colis agencés pour venir à fleur des rails tubulaires de sorte à permettre l'insertion des colis sur la surface de réception pour colis des réceptacles par simple déplacement latéral des colis.

### Brève description des dessins

La présente invention sera mieux comprise et d'autres avantages apparaîtront à la lecture de la description détaillée du mode de réalisation pris à titre d'exemple nullement limitatif et illustré par les dessins annexés, dans lesquels :
[Fig 1] - La figure 1 est une représentation schématique d'une installation de tri selon l'invention ;
[Fig 2] - La figure 2 est une représentation schématique de plusieurs modules de réceptacle formant un train de réceptacles pour colis selon l'invention ;
[Fig 3] - La figure 3 est une représentation très schématique d'une partie du convoyeur de tri selon l'invention avec des trains de réceptacles pour colis qui descendent une portion du convoyeur de tri ;
[Fig 4] - La figure 4 est une représentation très schématique d'une partie du convoyeur de tri selon l'invention avec des trains de réceptacles pour colis qui montent une portion du convoyeur de tri ;
[Fig 5] - La figure 5 est une représentation très schématique d'une partie du convoyeur de tri selon l'invention avec des trains de réceptacles pour colis dont la surface de réception est progressivement redressée en zone d'insertion des colis ;
[Fig 6] - La figure 6 est une représentation schématique en coupe transversale du convoyeur de tri et d'une suspente supérieure selon l'invention ;
[Fig 7] - La figure 7 est une représentation schématique en coupe transversale du convoyeur de tri et d'une suspente inférieure selon l'invention ;
[Fig 8] - La figure 8 est une représentation très schématique d'un rail du convoyeur de tri selon l'invention, le rail ayant un profil montant dans le plan vertical en forme de double clothoïde avec une section intermédiaire rectiligne ;
[Fig 9] - La figure 9 est une représentation très schématique d'un rail du convoyeur de tri selon l'invention, le rail ayant un profil tournant dans le plan horizontal en forme de double clothoïde avec une section intermédiaire circulaire.

### Description détaillée de l'invention

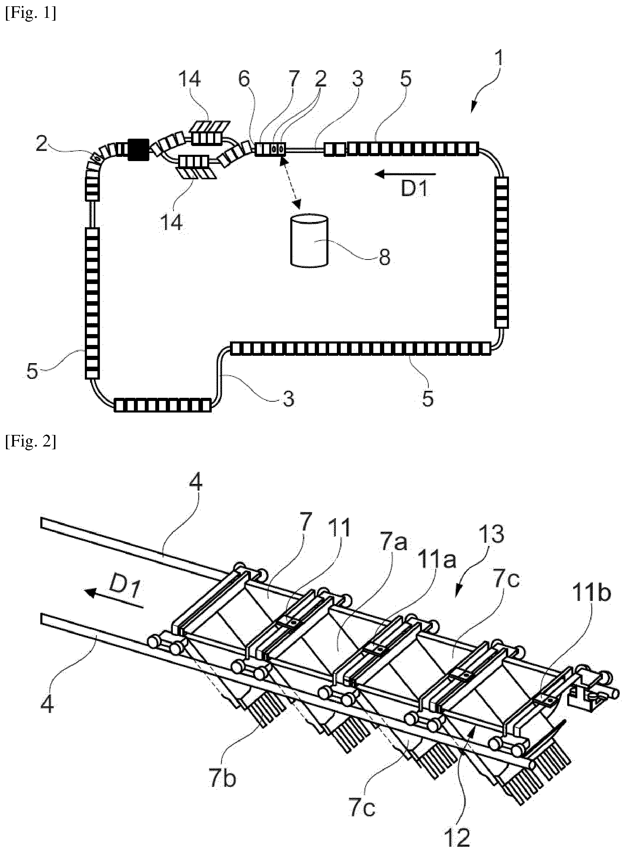

L'installation de tri 1 de colis 2 selon l'invention, également appelée trieur, représentée sur la figure 1 est particulièrement bien adaptée pour trier des colis hétérogènes à débit élevé, tels que des colis de type PPI (Petit Paquet International) typiques du e-commerce, tout en ayant une emprise au sol et en hauteur réduite.

L'installation de tri 1 de colis 2 selon l'invention comprend notamment un convoyeur de tri 3 en boucle à rails tubulaires 4 de guidage et des sorties de tri 5 réparties le long du convoyeur de tri 3.

Le convoyeur de tri 3 est équipé de chariots 6 circulant sur les rails tubulaires 4 de guidage en suivant une certaine direction de convoyage D1 et de réceptacles 7 pour colis 2 accrochés aux chariots 6.

Les réceptacles 7 selon l'invention sont conçus pour réceptionner, convoyer et trier les colis dans les sorties de tri 5 selon un plan de tri prédéterminé.

Le plan de tri est enregistré en mémoire d'une unité de contrôle commande 8, qui contrôle en retour le déplacement des chariots 6 et certains mouvements des réceptacles 7 de tri comme expliqué ci-après.

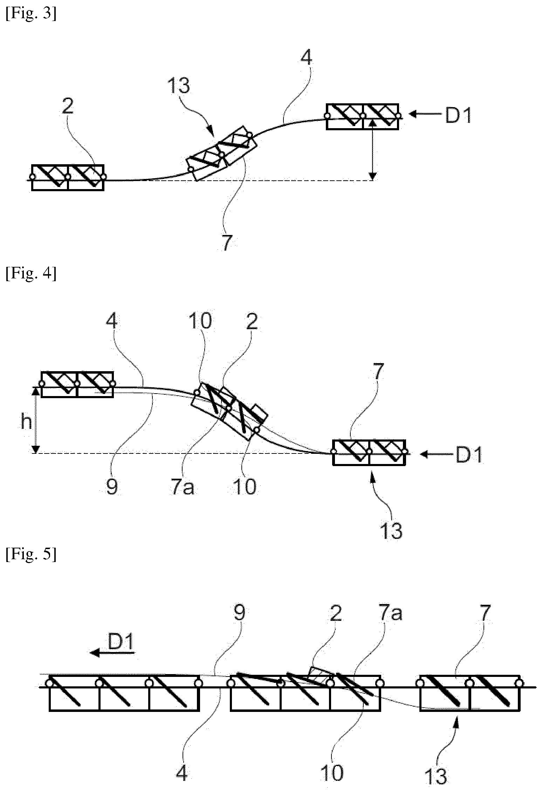

Dans l'exemple représenté sur les figures 3 et 4, les réceptacles 7 pour colis 2 comprennent une surface de réception 7a pour colis inclinable entre une position horizontale dans laquelle la surface de réception 7a vient à fleur des rails tubulaires 4 de guidage de sorte que les colis 2 peuvent être insérés sur le réceptacle 7 par glissement et une position inclinée dans laquelle la surface de réception 7a est inclinée dans la direction de convoyage D1, préférentiellement vers l'arrière, de sorte que les colis 2 sont maintenus et abrités des effets aérodynamiques durant le transport et peuvent être évacués dans les sorties de tri 5 par gravité suivant une trajectoire quasi-verticale.

Le convoyeur de tri 3 comprend également un chemin de came 9 profilé en continu ou en discontinu le long du convoyeur de tri, et chaque réceptacle 7 comprend une came 10 conçue pour coopérer avec le chemin de came 9 pendant le déplacement du chariot 6 dans la direction de convoyage D1, de sorte à positionner d'une part la surface de réception 7a pour colis 2 en position horizontale en zone d'insertion des colis, visible en figure 5, et à maintenir d'autre part la surface de réception 7a pour colis 2 en position inclinée par rapport à l'horizontale en montée, visible en figure 4, et ce sans qu'un colis 2 éventuellement présent sur le réceptacle ne perde contact avec la surface de réception 7a pendant son déplacement dans la direction de convoyage D1.

A titre d'exemple, en montée, la surface de réception 7a sera redressée pour maintenir la surface de réception 7a à 45° par rapport à l'horizontal.

Dans l'exemple décrit en figure 3, le chemin de came 9 n'est pas utilisé en descente puisque l'inclinaison des rails du convoyeur de tri 3 et l'inclinaison de la surface de réception 7a sont conçues de manière à ce que lorsqu'un chariot descend les rails, sa surface de réception 7a s'inclinera naturellement pour tendre vers l'horizontal, sans jamais l'atteindre.

A titre d'exemple, l'angle d'inclinaison de la surface de réception 7a sera compris entre 0° pour le chargement des colis 2 et 45° pour le convoyage et le déchargement des colis 2.

Aussi, dans le but de faciliter le tri des colis 2 de type PPI, les réceptacles 7 pour colis 2 pourront se présenter sous la forme de godets comprenant des flancs latéraux fixes 7c et une paroi de fond faisant office de surface de réception 7a pour colis 2, la paroi de fond étant terminée par une trappe d'évacuation 7b apte à retenir ou libérer un colis 2 lorsque la surface de réception 7a pour colis 2 est en position inclinée.

Ainsi, l'utilisation de godet et l'inclinaison de la surface de réception 7a dans les godets permet de grandement limiter l'éjection des colis 2 par effet aérodynamique, notamment dans les descentes et les montées.

Dans l'exemple représenté sur la figure 2, les chariots 6 selon l'invention sont emmanchés aux rails tubulaires 4 de guidage de manière à ce que les chariots 6 soient contraints de se déplacer uniquement dans la direction de convoyage D1.

Chaque réceptacle 7 selon l'invention est quant à lui intercalé entre deux chariots 6 en aval et en amont dans la direction de convoyage D1.

A titre d'exemple et comme illustré sur la figure 2, chaque réceptacle 7 est également intercalé entre les deux rails tubulaires 4 du convoyeur de tri 3 de manière à limiter l'emprise en hauteur de l'installation de tri 1 selon l'invention.

On comprend donc que les chariots 6 et les rails tubulaires 4 du convoyeur de tri 3 définissent un espace dans lequel vient s'intercaler un réceptacle 7.

Le convoyeur de tri 3 selon l'invention comprend également des liaisons pivot 11, par exemple des liaisons rotules, conçues pour relier en pivotement chaque réceptacle 7 à la fois à un chariot 6 qui le succède et à un chariot 6 qui le précède dans la direction de convoyage D1.

Ainsi, l'ensemble réceptacle 7 et chariots 6 aval et amont reliés par liaisons pivot forme un module 12 de réceptacle.

A titre d'exemple et comme illustré sur la figure 2, chaque liaison pivot 11 comprend ici un bras 11a qui s'étend entre un réceptacle 7 et un chariot 6, et au moins un axe 11b pivot disposé sur le chariot 6 et/ou sur le réceptacle 7, le bras étant monté en pivotement sur l'axe 11b.

L'axe 11b pourra être agencé à équidistance des deux rails tubulaires 4 de manière à autoriser la même amplitude de pivotement latérale des réceptacles 7 dans les virages.

Chaque réceptacle 7 sera également suffisamment espacé des deux chariots 6 qui le précède et qui le succède dans la direction de convoyage D1 de manière à autoriser un basculement du réceptacle 7 vers l'avant ou l'arrière sans entrer en contact avec les deux chariots 6 ou les réceptacles 7 en amont et en aval, notamment lors des changements de hauteur des rails tubulaires 4 de guidage.

Les liaisons pivot 11 sont donc avantageusement conçues pour permettre le pivotement latéral et vertical des réceptacles 7 par rapport aux chariots 6 lors de leur déplacement dans la direction de convoyage D1.

Dans le cas où l'axe 11b de pivotement des liaisons pivots 11 se trouve sur les chariots 6, les liaisons pivot 11 reliant deux réceptacles 7 à un même chariot 6 pourront partager le même axe 11b de pivotement.

Ainsi, lorsqu'un module 12 de réceptacle se déplace dans la direction de convoyage D1, le réceptacle 7 est apte à pivoter par rapport aux chariots 6, c'est-à-dire transversalement à la direction de convoyage D1.

L'invention consiste également à relier plusieurs modules 12 de réceptacles ensemble pour former un train 13 de réceptacles 7 pour colis 2.

Un train 13 de réceptacles 7 pour colis 2 selon l'invention est donc formé d'une alternance de réceptacles 7 et de chariots 6 dans la direction de convoyage D1.

On comprendra que l'utilisation de modules 12 de réceptacle 7 permet d'utiliser différents types de réceptacles 7 pour trier différents types de colis 2.

On comprendra également que plusieurs trains 13 de réceptacles 7 pour colis 2 pourront venir équiper l'installation de tri 1, chacun pouvant être autonome dans son déplacement dans la direction de convoyage D1 et comprendre un nombre de modules 12 de réceptacle qui lui est propre.

Sans restreindre la portée de l'invention, l'installation de tri 1 pourra être équipée de dispositifs d'insertion 14 de colis 2, comme représenté sur la figure 1, conçus pour insérer les colis 2 sur les réceptacles 7 en cours de convoyage.

Les dispositifs d'insertion 14 de colis 2 sont ici agencés pour venir à fleur des rails tubulaires 4 de sorte à permettre l'insertion des colis 2 sur les réceptacles 7, et plus particulièrement sur la surface de réception 7a, par exemple simple glissement latérale des colis 2.

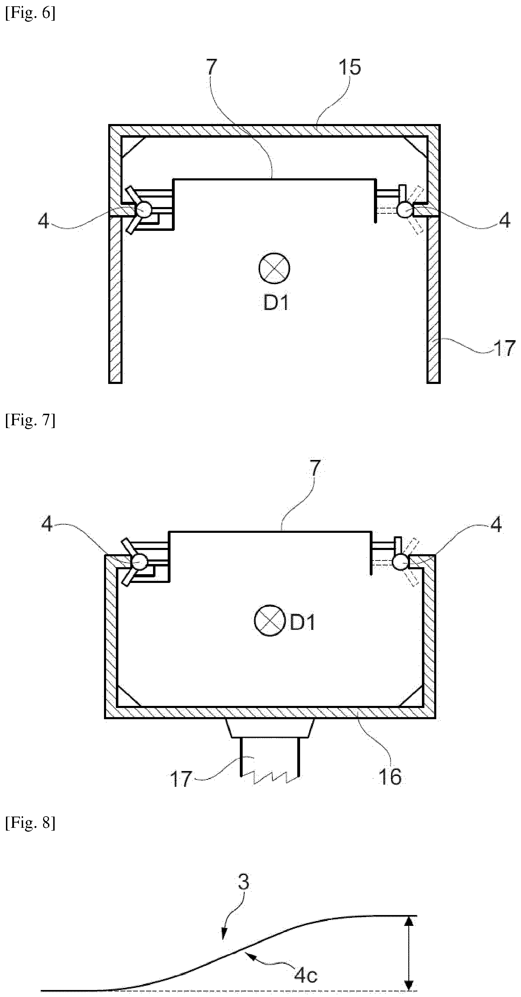

Enfin, afin d'optimiser l'agencement de l'installation de tri 1 et de faciliter le déplacement des colis 2 hétérogènes dans la direction de convoyage D1, les rails tubulaires 4 du convoyeur de tri seront suspendus par au moins une suspente supérieure 15 ou une suspente inférieure 16 montée sur un châssis 17, comme représenté respectivement sur les figures 6 et 7.

La suspente inférieure 16 selon l'invention s'étendra sous les chariots 6 et les réceptacles 7 de sorte à autoriser le chargement de colis 2 par le côté et/ou le dessus du convoyeur de tri 3.

La suspente supérieure 17 s'étendra quant à elle au-dessus des chariots et des réceptacles 7 de sorte à autoriser le déchargement des colis 2 sous le convoyeur de tri 3.

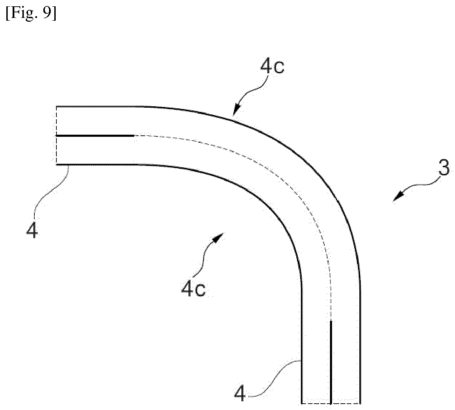

Enfin, toujours dans l'optique d'optimiser l'agencement et la compacité de l'installation de tri 1, tout en autorisant une vitesse élevée, les rails tubulaires 4 du convoyeur de tri 3 pourront présenter des sections de rails courbes 4c en forme de clothoïdes, visible en figures 8 et 9.

Par rail courbe en forme de clothoïde, on entend des rails tubulaires avec des rayons de courbure qui varient dans la courbure générale du virage ou de la montée/descente.

L'utilisation des rails courbes en forme de clothoïdes permet ainsi d'autoriser des prises de dénivelé importantes comme représenté en figure 8 et de prendre des virages serrés comme représenté en figure 9.

## Revendications

1. Installation de tri (1) de colis (2) comprenant un convoyeur de tri (3) en boucle et des sorties de tri (5) réparties le long du convoyeur de tri, ledit convoyeur de tri comprenant des réceptacles (7) pour colis conçus pour convoyer des colis selon une certaine direction de convoyage (D1) et les trier dans les sorties de tri selon un plan de tri prédéterminé, le convoyeur de tri comprenant deux rails tubulaires (4) parallèles qui s'étendent dans la direction de convoyage et des chariots (6) emmanchés sur les rails tubulaires conçus pour déplacer les réceptacles pour colis selon ladite certaine direction de convoyage, **caractérisée en ce que** chaque réceptacle est intercalé entre deux chariots et est relié auxdits deux chariots par des liaisons pivot (11) pour former un module (12) de réceptacle, et **en ce que** plusieurs modules de réceptacles sont reliés ensemble pour former un train (13) de réceptacles pour colis dans lequel les réceptacles et les chariots sont répartis en alternance dans la direction de convoyage et dans lequel les réceptacles sont aptes à pivoter par rapport aux chariots lorsque les chariots se déplacent dans la direction de convoyage.

2. Installation de tri (1) de colis (2) selon la revendication 1, **caractérisée en ce que** les liaisons pivot sont conçues de manière à ce que chaque réceptacle est apte à pivoter latéralement et verticalement par rapport aux chariots auxquels il est relié.

3. Installation de tri (1) de colis (2) selon la revendication 1, **caractérisée en ce que** chaque liaison pivot comprend un axe (11b) de pivotement sur le chariot partagé avec une autre liaison pivot qui relie le réceptacle qui le précède ou qui le succède dans la direction de convoyage.

4. Installation de tri (1) de colis (2) selon l'une quelconque des revendications précédentes, **caractérisée en ce que** les rails tubulaires du convoyeur de tri comprennent des sections de rails courbes (4c) en forme de clothoïdes.

5. Installation de tri (1) de colis (2) selon l'une quelconque des revendications précédentes, caractérisée en que les réceptacles pour colis comprennent une surface de réception (7a) pour colis inclinable entre une position horizontale dans laquelle la surface de réception vient à fleur des rails de sorte que les colis peuvent être insérés sur le réceptacle par glissement et une position inclinée dans laquelle la surface de réception est inclinée dans la direction de convoyage de sorte que les colis peuvent être évacués dans les sorties de tri par gravité.

6. Installation de tri (1) de colis (2) selon la revendication 5, **caractérisée en ce que** le convoyeur de tri comprend un chemin de came (9) et **en ce que** chaque réceptacle de tri comprend une came (10) conçue pour coopérer avec ledit chemin de came pendant le déplacement du chariot dans la direction de convoyage de sorte à positionner la surface de réception pour colis en position horizontale ou en position inclinée.

7. Installation de tri (1) de colis (2) selon la revendication 5 ou 6, caractérisée en qu'au moins un réceptacle pour colis se présente sous la forme d'un godet comportant des flancs latéraux fixes (7c) et une paroi de fond faisant office de surface de réception pour colis, ladite paroi de fond étant terminée par une trappe d'évacuation (7b) apte à retenir ou libérer un colis lorsque la surface de réception pour colis est en position inclinée.

8. Installation de tri (1) de colis (2) selon l'une quelconque des revendications précédentes, **caractérisée en ce que** le convoyeur de tri comprend au moins une suspente inférieure (16) montée sur un châssis (17) conçue pour supporter les rails tubulaires, ladite au moins une suspente inférieure s'étendant sous les chariots et les réceptacles de sorte à autoriser le chargement de colis par dessus les rails tubulaires du convoyeur de tri.

9. Installation de tri (1) de colis (2) selon l'une quelconque des revendications précédentes, **caractérisée en ce que** le convoyeur de tri comprend au moins une suspente supérieure (15) montée sur un châssis (17) conçue pour supporter les rails tubulaires, ladite au moins une suspente supérieure s'étendant au-dessus des chariots et des réceptacles de sorte à autoriser le déchargement des colis sous le convoyeur de tri.

10. Installation de tri (1) de colis (2) selon l'une quelconque des revendications précédentes, **caractérisée en ce que** le convoyeur de tri comprend des dispositifs d'insertion (14) de colis agencés pour venir à fleur des rails tubulaires de sorte à permettre l'insertion des colis sur la surface de réception pour colis des réceptacles par simple déplacement latérale des colis.

## Patentansprüche

1. Sortieranlage (1) für Packstücke (2), umfassend ein Sortierförderband (3) in Schleife und verteilte Sortierauslässe (5) entlang des Sortierförderbands, das Sortierförderband umfassend Behälter (7) für Packstücke, die zum Befördern von Packstücken entlang einer feststehenden Förderrichtung (D1) und zum Sortieren dieser in die Sortierauslässe gemäß einem vorbestimmten Sortierplan, konzipiert sind, das Sortierförderband umfassend zwei parallele Rohrschienen (4), die sich in Förderrichtung erstrecken und Wagen (6), die auf den Rohrschienen aufgesetzt sind, die zum Bewegen der Behälter für Packstücke entlang der feststehenden Förderrichtung konzipiert sind, **dadurch gekennzeichnet, dass** jeder Behälter zwischen zwei Wagen eingefügt ist, und mit den zwei Wagen durch Gelenkzapfenverbindungen (11) zum Ausbilden eines Behältermoduls (12) verkettet ist, **und dadurch, dass** mehrere Behältermodule zum Ausbilden eines Zugs (13) von Behältern für Packstücke zusammen verkettet sind, wobei die Behälter und die Wagen in der Förderrichtung abwechselnd verteilt sind, und wobei die Behälter zum Schwenken relativ zu den Wagen geeignet sind, wenn sich die Wagen in der Förderrichtung bewegen.

2. Sortieranlage (1) für Packstücke (2) nach Anspruch 1,
**dadurch gekennzeichnet, dass** die Gelenkzapfenverbindungen konzipiert sind, sodass jeder Behälter zum seitlichen und vertikalen Schwenken relativ zu den Wagen, mit denen sie verkettet sind, geeignet ist.

3. Sortieranlage (1) für Packstücke (2) nach Anspruch 1,
**dadurch gekennzeichnet, dass** jede Gelenkzapfenverbindung eine Schwenkachse (11b) auf dem Wagen umfasst, der mit einer weiteren Gelenkzapfenverbindung geteilt wird, die den Behälter, der ihm vorausgeht oder ihm nachfolgt in der Förderrichtung verkettet.

4. Sortieranlage (1) für Packstücke (2) nach einem der vorstehenden Ansprüche, **dadurch gekennzeichnet, dass** die Rohrschienen des Sortierförderbands Abschnitte von gebogenen Schienen (4c) in Form von Klothoiden umfassen.

5. Sortieranlage (1) für Packstücke (2) nach einem der vorstehenden Ansprüche, **dadurch gekennzeichnet, dass** die Behälter für Packstücke eine Aufnahmeoberfläche (7a) für Packstücke umfassen, die zwischen einer horizontalen Position, in der die Aufnahmeoberfläche mit den Schienen bündig ist, sodass die Packstücke in den Behälter durch Gleiten eingesetzt werden können, und einer geneigten Position, in der die Aufnahmeoberfläche in die Förderrichtung geneigt ist, sodass die Packstücke in die Sortierauslässe durch Schwerkraft ausgegeben werden können, neigbar ist.

6. Sortieranlage (1) für Packstücke (2) nach Anspruch 5,
**dadurch gekennzeichnet, dass** das Sortierförderband eine Nockenbahn (9) umfasst, **und dadurch, dass** jeder Sortierbehälter einen Nocken (10) umfasst, der zum Zusammenwirken mit der Nockenbahn während der Bewegung des Wagens in der Förderrichtung konzipiert ist, um die Aufnahmeoberfläche für Packstücke in eine horizontale Position oder in eine geneigte Position zu positionieren.

7. Sortieranlage (1) für Packstücke (2) nach Anspruch 5 oder 6,
**dadurch gekennzeichnet, dass** mindestens ein Behälter für Packstücke in Form eines Trogs vorliegt, der feste Seitenwände (7c) und eine Bodenwand vorweist, die als Aufnahmeoberfläche für Packstücke dient, wobei die Bodenwand mit einer Ausgabeklappe (7b) endigt, die geeignet ist, ein Packstück zurückzuhalten oder freizugeben, wenn die Aufnahmeoberfläche für Packstücke in einer geneigten Position ist.

8. Sortieranlage (1) für Packstücke (2) nach einem der vorstehenden Ansprüche, **dadurch gekennzeichnet, dass** das Sortierförderband mindestens eine untere Aufhängung (16) umfasst, die an einem Rahmen (17) montiert ist, der zum Stützen der Rohrschienen konzipiert ist, wobei sich mindestens eine untere Aufhängung unter den Wagen und den Behältern erstreckt, um die Beladung von Packstücken über den Rohrschienen des Sortierförderbands zu ermöglichen.

9. Sortieranlage (1) für Packstücke (2) nach einem der vorstehenden Ansprüche, **dadurch gekennzeichnet, dass** das Sortierförderband mindestens eine obere Aufhängung (15) umfasst, die an einem Rahmen (17) montiert ist, der zum Stützen der Rohrschienen konzipiert ist, wobei sich mindestens eine obere Aufhängung über den Wagen und den Behältern erstreckt, um die Entladung von Packstücken unter dem Sortierförderband zu ermöglichen.

10. Sortieranlage (1) für Packstücke (2) nach einem der vorstehenden Ansprüche, **dadurch gekennzeichnet, dass** das Sortierförderband Packstückeinsatzvorrichtungen (14) umfasst, die zum bündigen Abschließen mit den Rohrschienen angeordnet sind, um den Einsatz von Packstücken auf der Aufnahmeoberfläche für Packstücke der Behälter durch einfache seitliche Bewegung der Packstücke zu erlauben.

## Claims

1. Sorting installation (1) for parcels (2), comprising a looped sorting conveyor (3) and sorting outlets (5) distributed along the sorting conveyor, said sorting conveyor comprising parcel receptacles (7) designed to convey the parcels in a certain conveying direction (D1) and sort them into the sorting outlets according to a predetermined sorting plan, the sorting conveyor comprising two parallel tubular rails (4), extending in the conveying direction, and carriages (6) fitted onto the tubular rails, designed to move the parcel receptacles in said certain conveying direction, **characterized in that** each receptacle is interposed between two carriages and is connected to said two carriages by pivot connections (11) to form a receptacle module (12), **and in that** a plurality of receptacle modules are connected together to form a train (13) of parcel receptacles, in which train the receptacles and the carriages are distributed alternately in the conveying direction and in which the receptacles are capable of pivoting relative to the carriages when the carriages move in the conveying direction.

2. Sorting installation (1) for parcels (2) according to claim 1,
**characterized in that** the pivot connections are designed in such a way that each receptacle is capable of pivoting laterally and vertically with respect to the carriages to which it is connected.

3. Sorting installation (1) for parcels (2) according to claim 1,
**characterized in that** each pivot connection comprises a pivot pin (11b) on the carriage, which pivot pin is shared with another pivot connection which connects the receptacle preceding or succeeding it in the conveying direction.

4. Sorting installation (1) for parcels (2) according to any of the preceding claims, **characterized in that** the tubular rails of the sorting conveyor comprise portions of curved rails (4c) in the form of clothoid curves.

5. Sorting installation (1) for parcels (2) according to any of the preceding claims, **characterized in that** the parcel receptacles comprise a parcel receiving surface (7a) tiltable between a horizontal position, in which the receiving surface is flush with the rails so that the parcels can be inserted onto the receptacle by sliding, and a tilted position, in which the receiving surface is tilted in the conveying direction so that the parcels can be discharged into the sorting outlets by gravity.

6. Sorting installation (1 ) for parcels (2) according to claim 5,
**characterized in that** the sorting conveyor comprises a cam track (9) **and in that** each sorting receptacle comprises a cam (10) designed to cooperate with said cam track during the movement of the carriage in the conveying direction so as to position the parcel receiving surface in the horizontal or tilted position.

7. Sorting installation (1) for parcels (2) according to claim 5 or claim 6, **characterized in that** at least one parcel receptacle is in the form of a bucket comprising fixed side flanks (7c) and a bottom wall acting as a parcel receiving surface, said bottom wall being terminated by a discharge trap (7b) capable of retaining or releasing a parcel when the parcel receiving surface is in the tilted position.

8. Sorting installation (1) for parcels (2) according to any of the preceding claims, **characterized in that** the sorting conveyor comprises at least one lower hanger (16) which is mounted on a frame (17) and designed to support the tubular rails, said at least one lower hanger extending under the carriages and the receptacles so as to allow the parcels to be loaded over the tubular rails of the sorting conveyor.

9. Sorting installation (1) for parcels (2) according to any of the preceding claims, **characterized in that** the sorting conveyor comprises at least one upper hanger (15) which is mounted on a frame (17) and designed to support the tubular rails, said at least one upper hanger extending above the carriages and the receptacles so as to allow the parcels to be unloaded under the sorting conveyor.

10. Sorting installation (1) for parcels (2) according to any of the preceding claims, **characterized in that** the sorting conveyor comprises parcel insertion devices (14) arranged to be flush with the tubular rails so as to allow the parcels to be inserted onto the parcel receiving surface of the receptacles by simple lateral movement of the parcels.
